# EUROPEAN PATENT APPLICATION

(11) **EP 3 192 915 A1**
(43) Date of publication of application: **19.07.2017**
(21) Application number: 15840594.4
(22) Date of filing: 07.09.2015
(51) Int. Cl.: D06F 37/30, D06F 37/40, D06F 25/00

(54) **DRUM WASHING MACHINE**

(30) Priority: 10.09.2014 JP 2014183875
(71) Applicant: Haier Asia Co., Ltd., Chiyoda-ku Tokyo 100-0005 (JP); Qingdao Haier Washing Machine Co., Ltd., Laoshan District Qingdao, Shandong 266101 (CN)
(72) Inventor: HIROSE, Satoshi, Tokyo 100-0005 (JP)
(74) Representative: Pfenning, Meinig & Partner mbB
(86) International application number: PCT/CN2015/089036
(87) International publication number: WO 2016/037551

(57) **Abstract**

With respect to a drum washing machine in which a planetary gear mechanism is adopted to decelerate rotation of a driving motor and then transfer the rotation to a drum, it is sought to simplify a manufacture of the planetary gear mechanism. A drum washing machine of the present disclosure decelerates rotation of the driving motor through the planetary gear mechanism and then transfers the rotation to the drum, so that the drum and a rotating body with a projection rotate at different rotating speeds. The planetary gear mechanism includes a sun gear, an internal gear, a plurality of planetary gears (430), and a planetary gear carrier (440). The planetary gear carrier (440) has a rear planetary carrier (442) and a front planetary carrier (441), through which the plurality of planetary gears (430) are clamped from both sides thereof, and supporting shafts (443) erected between the front planetary carrier and the rear planetary carrier, the planetary gears (430) are rotatably provided on the supporting shafts. Base ends of the supporting shafts (443) are fixed on the rear planetary carrier (442) before the planetary gears (430) being provided on the supporting shafts (443). Moreover, the front planetary carrier (441) is fixed at front ends (443a) of the supporting shafts (443) provided with the planetary gears (430).

## Description

### TECHNICAL FIELD

The present disclosure relates to a drum washing machine, which not only can carry out an operation from washing to drying continuously, but also can carry out washing without drying.

### BACKGROUND

In the past, a drum washing machine enables a drum of horizontal axis type to rotate in an outer tank the bottom of which is stored with water, so that washings are lifted up and dropped down by baffles arranged in the drum, and the washings are thrown to an inner circumferential surface of the drum to realize washing.

In this way, in a structure of stirring the washings by the baffles, the washings are difficult to twine or rub against each other. Therefore, compared with an automatic washing machine in which the washings are washed by rotating a pulsator in a washing and spin-drying tank, a mechanical force acted on the washings by the drum washing machine tends to be smaller, and the detergency tends to be degraded.

Therefore, as for the drum washing machine, a following structure can be adopted so as to improve the detergency. In such structure, a rotating body a surface of which is provided with a projection is arranged on an end of the drum, and the drum and the rotating body are enabled to rotate at different rotating speeds during a washing or rinsing process. For example, the rotation of a driving motor is decelerated by the drum washing machine through a planetary gear mechanism and then transferred to the drum (with reference to patent literature 1).

The planetary gear mechanism includes a sun gear, an annular internal gear surrounding the sun gear, a plurality of planetary gears interposed between the sun gear and the internal gear, and a planetary gear carrier for retaining the planetary gears. For example, the planetary gear carrier adopts the following structure: the plurality of planetary gears are clamped by two disc-shaped planetary carriers, and each planetary gear is rotatably held through a supporting shaft erected between the two planetary carriers.

### Existing Technical Literature

### Patent Literature

Patent Literature 1: Japanese Laid-Open Patent Publication No. 2008-104684

### SUMMARY

### Problems to be solved in the disclosure

In the planetary gear carrier with the above-mentioned structure, a base end of each supporting shaft is fixed to the planetary carrier on one side in advance, and a front end is inserted into a recess formed in the planetary carrier on the other side when the two planetary carriers are connected. Therefore, the two planetary carriers need to be formed with positions of the supporting shaft and the recess being aligned.

In addition, in the planetary gear carrier with the above-mentioned structure, the two planetary carriers are fixed by forming a mounting protrusion on the planetary carrier on one side and fixing a front end of the mounting protrusion to the planetary carrier on the other side. In this case, if the mounting protrusion is fixed by a screw, an inserting hole, into which the screw is inserted, is formed in a position corresponding to the mounting protrusion of the planetary carrier on the other side; and if the mounting protrusion is fixed through riveting, an inserting hole, into which the front end of the mounting protrusion to be riveted is inserted, is formed in a position corresponding to the mounting protrusion of the planetary carrier on the other side. Therefore, the two planetary carriers need to be formed with the positions of the mounting protrusion and the inserting hole being aligned.

In this way, in the planetary gear carrier with the above-mentioned structure, the positions of the mounting protrusion and the inserting hole need to be aligned in addition to the alignment of the positions of the supporting shaft and the recess, so the planetary gear carriers need to be manufactured at a high precision. As a result, a hidden risk that the planetary gear mechanism is not easy to be manufactured exists.

The present disclosure is made in view of the problem, and aims to simplify a manufacture of the planetary gear mechanism with respect to the drum washing machine adopting a structure of transferring rotation of the driving motor to the drum through the planetary gear mechanism.

### Solutions for solving the problems

A drum washing machine of the present disclosure in a main mode includes: an outer tank arranged in a housing; a drum, which is arranged in the outer tank and capable of rotating about a horizontal axis or an inclination axis inclining with respect to a horizontal direction; a rotating body, which is arranged at a rear part of the drum, and a surface of the rotating body being provided with a projection for contacting washings; and a driving part, the driving part includes a driving motor and a planetary gear mechanism, a rotation of a driving motor is transferred to the drum after being decelerated through the planetary gear mechanism, so that the drum and a rotating body are enable to rotate at different rotating speeds. Herein, the planetary gear mechanism includes a sun gear, an annular internal gear surrounding the sun gear, a plurality of planetary gears interposed between the sun gear and the internal gear, and a planetary gear carrier through which the planetary gears are rotatably held. Further, the planetary gear carrier has a first planetary carrier and a second planetary carrier, the plurality of planetary gears are clamped by the first planetary carrier and the second planetary carrier from both sides of the planetary gears, and supporting shafts erected between the first planetary carrier and the second planetary carrier, the planetary gears are rotatably provided on the supporting shaft. Base ends of the supporting shafts are fixed to the first planetary carrier before the planetary gears being provided on the supporting shafts, or the supporting shafts are integrally formed with the first planetary carrier. Further, the second planetary carrier is fixed to front ends of the supporting shafts provided with the planetary gears.

According to the above-mentioned structure, the first planetary carrier and the second planetary carrier are fixed by fixing the second planetary carrier at the front ends of the supporting shafts provided with the planetary gears. Thus, compared with a previous structure of additionally providing a mounting protrusion for fixing the first planetary carrier and the second planetary carrier between the first planetary carrier and the second planetary carrier, the first planetary carrier and the second planetary carrier can be manufactured at a high precision without not only aligning positions of the front end of the supporting shaft and the inserting hole of the second planetary carrier, but also aligning positions of the mounting protrusion and inserting hole corresponding to screws of the mounting protrusion and the like. As a result, the manufacture of the planetary gear carrier and even the planetary gear mechanism can be simplified.

The drum washing machine of the present embodiment can adopt a structure in which the second planetary carrier has an inserting hole to be inserted by the front end of each supporting shaft. In this case, the second planetary carrier is fixed at the front end of the supporting shaft by riveting the front end of the supporting shaft penetrating through the inserting hole.

According to the above-mentioned structure, the front ends of the supporting shafts and the second planetary carrier are fixed by riveting, thus the first planetary carrier and the second planetary carrier can be fixed without using screws or other components for fixing the first planetary carrier and the second planetary carrier.

In the case of adopting the above-mentioned structure, the drum washing machine further includes a stress part; and the stress part is interposed between the first planetary carrier and the second planetary carrier and bears force applied to the first planetary carrier together with the supporting shafts when the front ends of the supporting shafts are stressed by riveting.

If such a structure is adopted, since the force of the supporting shafts during riveting can be reduced, deformation and the like of the supporting shafts during riveting can be prevented.

The drum washing machine of the present embodiment can adopt a structure in which the second planetary carrier has the inserting holes to be inserted by the screws. In this case, the second planetary carrier is fixed at the front ends by fixing the screws penetrating through the inserting holes at the front ends of the supporting shafts.

According to the above-mentioned structure, the planetary gear carrier can be easily disassembled by removing the screws.

The drum washing machine of the present embodiment can adopt a structure in which the internal gear is fixed to the rotating shaft of the drum. In this case, transfer paths for transferring a torque from the sun gear to the internal gear through the planetary gears is set to be any one of three to five in the planetary gear mechanism.

According to the above-mentioned structure, the torque of the sun gear can be dispersed and transferred at an appropriate size; and the size and the number of teeth of the planetary gears can be set to keep appropriate strength and number of teeth. As a result, the planetary gears are not easy to be damaged and the like; and reliability of the planetary gear mechanism can be improved.

### Effects of the disclosure

According to the present disclosure, in the case that a structure of decelerating the rotation of the driving motor through the planetary gear mechanism and then transferring the rotation to the drum is adopted in the drum washing machine, the drum washing machine can seek the simplification in the manufacture of the planetary gear mechanism.

Effects and meanings of the present disclosure are further clarified by the description of the following embodiment. However, the following embodiment is just an example during implementation of the present disclosure; and the present disclosure is not limited to contents recorded in the following embodiment.

### BRIEF DESCRIPTION OF DRAWINGS

FIG. 1 is a side sectional view illustrating a structure of a drum washing machine according to embodiments.
FIG. 2 is a sectional view illustrating a structure of a driving part according to embodiments.
FIG. 3 is a sectional view illustrating a structure of a driving part according to embodiments.
FIG. 4 is a rotor front view illustrating a structure of a rotor of a driving motor according to embodiments.
FIG. 5 is a diagram illustrating a structure of a planetary gear mechanism according to embodiments.
FIG. 6's (a)∼(c) are diagrams illustrating structures of a front planetary carrier constituting a planetary gear carrier according to embodiments.
FIG. 7's (a)∼(c) are diagrams illustrating structures of a rear planetary carrier, supporting shaft and a planetary carrier shaft constituting a planetary gear carrier according to embodiments.
FIG. 8 is a diagram illustrating assembly of a planetary gear carrier according to embodiments.
FIG. 9 is an enlarged perspective view illustrating a rear part of a bearing unit according to embodiments.
FIG. 10's (a)∼(c) are diagrams illustrating a structure of a clutch body according to embodiments.
FIG. 11 is a diagram illustrating a structure of a planetary gear carrier according to a modification.
FIG. 12 is a diagram illustrating a structure of a planetary gear carrier according to other modifications.

### DETAILED DESCRIPTION

Hereinafter, a drum washing machine without a drying function as an embodiment of the drum washing machine in the present disclosure is described by referring to drawings.

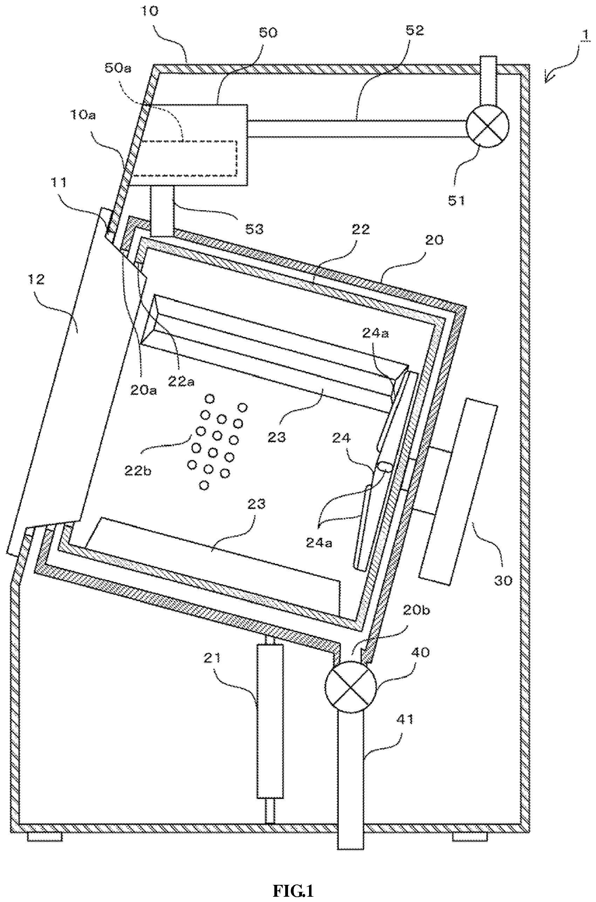

FIG. 1 is a side sectional view illustrating a structure of a drum washing machine 1.

The drum washing machine 1 includes a housing 10 forming an appearance. A front surface 10a of the housing 10 is inclined from a central part to an upper part, and a throwing inlet 11 for the washings is formed in an inclined surface. The throwing inlet 11 is covered by a door 12 which is freely opened and closed.

An outer tank 20 is elastically supported by a plurality of vibration dampers 21 in the housing 10. A drum 22 is rotatably arranged in the outer tank 20. The outer tank 20 and the drum 22 are inclined with a rear surface side being lowered relative to a horizontal direction. Thus, the drum 22 rotates about an inclination axis inclining relative to the horizontal direction. The inclination angle of the outer tank 20 and the drum 22 may be set as about 10-20 degrees. An opening part 20a on the front surface of the outer tank 20 and an opening part 22a on the front surface of the drum 22 are opposite to the throwing inlet 11. The opening part 20a and the opening part 22a together with the throwing inlet 11 are opened and closed by the door 12. A plurality of spin-drying holes 22b are formed in an inner circumferential wall of the drum 22. Further, three baffles 23 are arranged on the inner circumferential surface of the drum 22 in a circumferential direction at roughly equal intervals.

A rotating body 24 is rotatably arranged at the rear of the drum 22. The rotating body 24 has an approximate disc shape. A plurality of projections 24a radially extending from the central part are formed on a surface of the rotating body 24. The rotating body 24 coaxially rotates with the drum 22.

A driving part 30 configured to generate a torque for driving the drum 22 and the rotating body 24 is arranged at the rear of the outer tank 20. In a washing process and a rinsing process, the driving part 30 enables the drum 22 and the rotating body 24 to rotate at different rotating speeds in the same direction. Specifically, the driving part 30 enables the drum 22 to rotate at a rotating speed so that a centrifugal force exerted on the washings in the drum 22 is smaller than the gravity, and enable the rotating body 24 to rotate at a rotating speed greater than the rotating speed of the drum 22. On the other hand, in a spin-drying process, the driving part 30 enables the drum 22 and the rotating body 24 to integrally rotate at a rotating speed so that the centrifugal force exerted on the washings in the drum 22 is much larger than the gravity. A detailed structure of the driving part 30 is described below.

A drainage part 20b is formed at the bottom of the outer tank 20. The drainage part 20b is provided with a drainage valve 40. The drainage valve 40 is connected with a drainage hose 41. When the drainage valve 40 is opened, water stored in the outer tank 20 is discharged from the machine by the drainage hose 41.

A detergent box 50 is arranged on an upper part of the front in the housing 10. A detergent container 50a for containing detergents, which can be freely drawn out from the front, is received in the detergent box 50. The detergent box 50 is connected with a water feeding valve 51 arranged on the upper part at the rear of the housing 10 through a water feeding hose 52. In addition, the detergent box 50 is connected with an upper part of the outer tank 20 through a water injection pipe 53. When the water feeding valve 51 is opened, water from a faucet is supplied into the outer tank 20 by virtue of the water feeding hose 52, the detergent box 50 and the water injection pipe 53. At this moment, the detergents contained in the detergent container 50a are supplied into the outer tank 20 along with a water flow.

Next, a structure of the driving part 30 is described in detail.

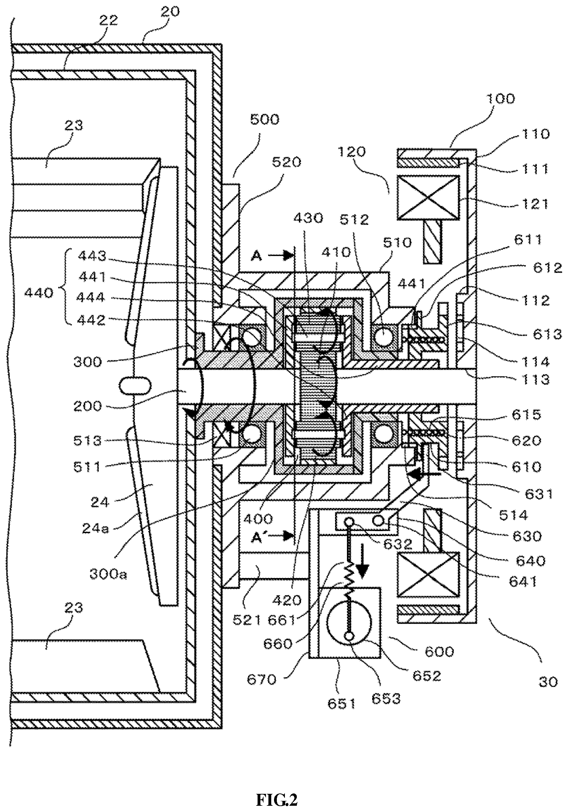

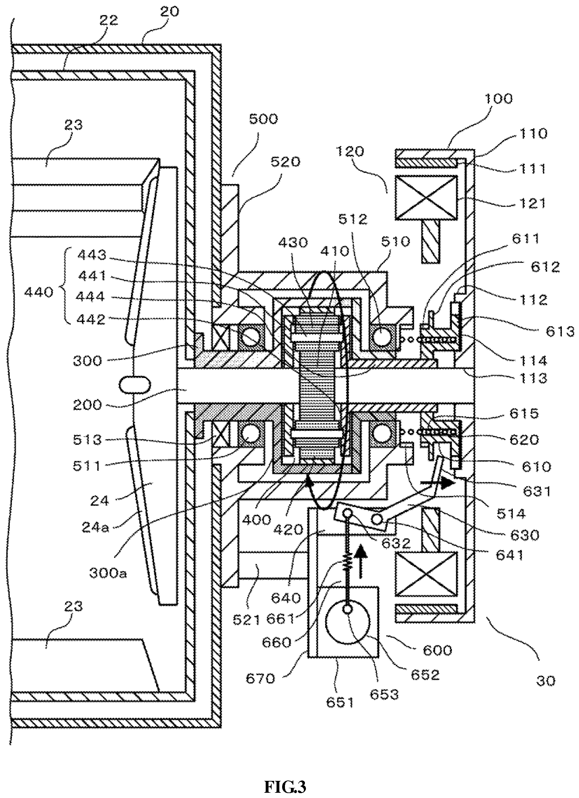

FIG. 2 and FIG. 3 are sectional views illustrating the structure of the driving part 30. FIG. 2 shows a state in which a driving form of the driving part 30 is switched to a biaxial driving form. FIG. 3 shows a state in which the driving form of the driving part 30 is switched to a uniaxial driving form.

The driving part 30 includes: a driving motor 100, a wing shaft 200, a drum shaft 300, a planetary gear mechanism 400, a bearing unit 500 and a clutch mechanism part 600. The driving motor 100 is configured to generate a torque for driving the rotating body 24 and the drum 22. The wing shaft 200 is enabled to rotate through the torque of the driving motor 100, and transmits the rotation thereof to the rotating body 24. The planetary gear mechanism 400 is configured to decelerate the rotation of the wing shaft 200, namely the rotation of a rotor 110 of the driving motor 100, and transmit the rotation to the drum shaft 300. The drum shaft 300 is configured to coaxially rotate with the wing shaft 200 at a rotating speed being decelerated by the planetary gear mechanism 400, and transmit the rotation to the drum 22. The wing shaft 200 and the drum shaft 300 are rotatably supported by the bearing unit 500. The driving form of the driving unit 30 is switched between the biaxial driving form and the uniaxial driving form by the clutch mechanism part 600. The biaxial driving form is a form in which the rotating body 24, namely the wing shaft 200, is enabled to rotate at a rotating speed the same as that of the driving motor 100, and the drum 22, namely the drum shaft 300, is enabled to rotate at a rotating speed being decelerated by the planetary gear mechanism 400. The uniaxial driving form is a form in which the rotating body 24, the drum 22 (namely the wing shaft 200, the drum shaft 300) and the planetary gear mechanism 400 integrally rotate at a rotating speed the same as that of the driving motor 100.

The driving motor 100 is an external rotor type direct current (DC) brushless motor, including the rotor 110 and a stator 120. The rotor 110 is formed as a cylinder with a bottom, and permanent magnets 111 are arranged on an inner circumferential surface thereof throughout the circumference of the rotor.

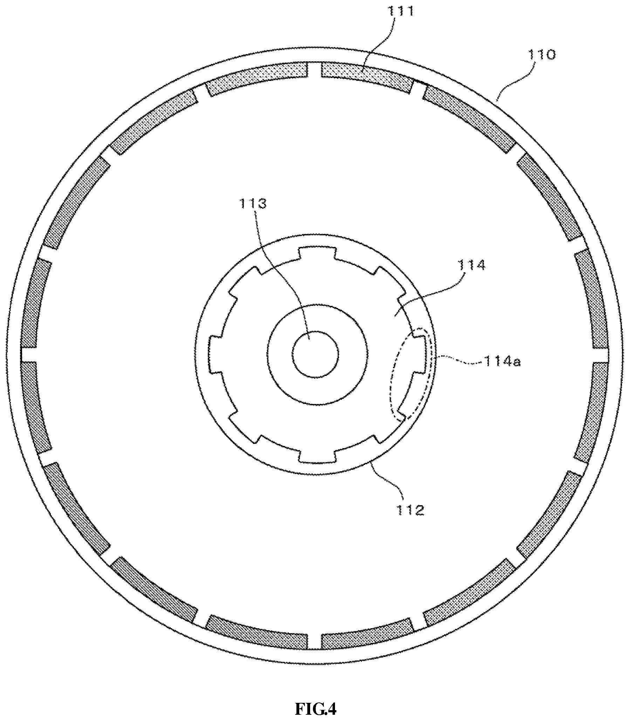

FIG. 4 is a front view of the rotor 110 illustrating a structure of the rotor 110 of the driving motor 100.

As shown in FIG. 4, a circular shaft sleeve part 112 is formed at a central part of the rotor 110. A shaft sleeve hole 113 for fixing the wing shaft 200 is formed in the shaft sleeve part 112, and an annular engaged recess 114 is formed at a periphery of the shaft sleeve hole 113. Uneven parts 114a are arranged at a periphery of the engaged recess 114 throughout the circumference.

Returning to FIG. 2 and FIG. 3, the stator 120 is provided with a coil 121 at a periphery thereof. The rotor 110 rotates when a driving current is supplied from a motor driving part not shown in the drawing to the coil 121 of the stator 120.

The drum shaft 300 is hollow, in which is provided with the wing shaft 200 and the planetary gear mechanism 400. The central part of the drum shaft 300 bulges out, and the bulged part forms a receiving part 300a for the planetary gear mechanism 400.

The planetary gear mechanism 400 includes: a sun gear 410; an annular internal gear 420 surrounding the sun gear 410; four groups of planetary gears 430 between the sun gear 410 and the internal gear 420, and a planetary gear carrier 440 through which the planetary gears 430 are rotatably held.

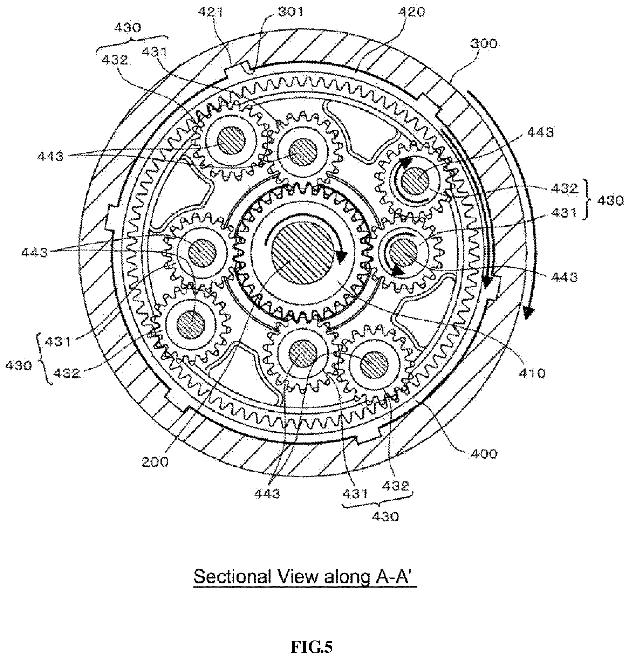

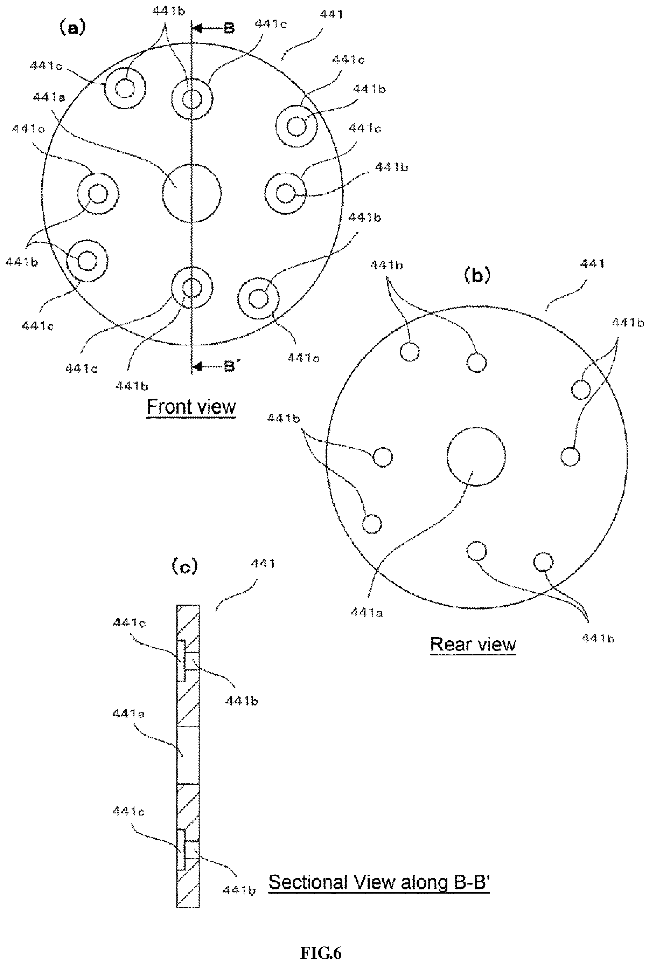

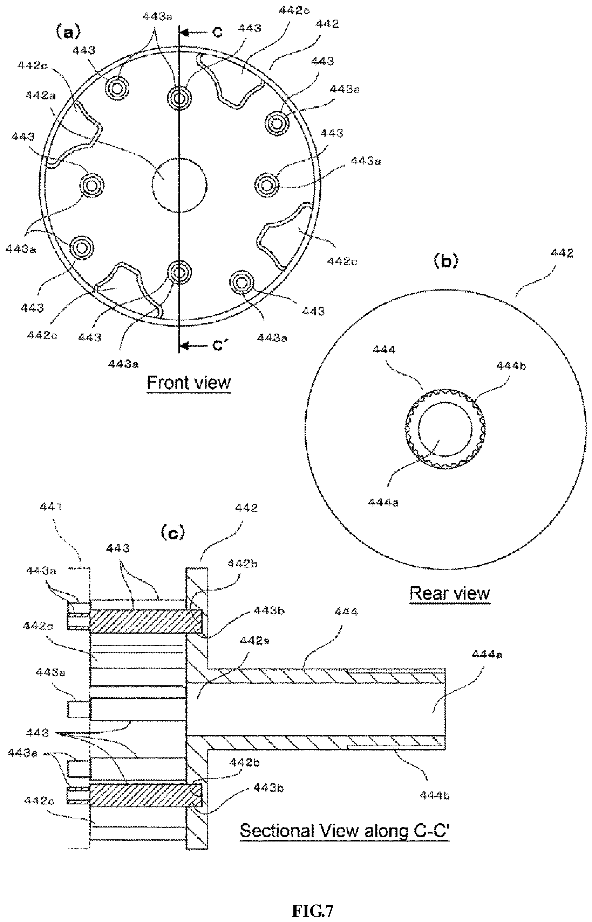

FIG. 5 is a diagram illustrating a structure of the planetary gear mechanism 400. FIG. 5 is a sectional view along A-A' in FIG. 2, in which structures except for the drum shaft 300 and the planetary gear mechanism 400 are omitted for convenience. FIG. 6's (a)∼(c) are diagrams illustrating a structure of a front planetary carrier 441 constituting the planetary gear carrier 440. FIG. 6's (a)∼(b) are a front view and a rear view respectively, and FIG. 6's (c) is a sectional view along B-B' in FIG. 6's (a). FIG. 7 is a diagram illustrating structures of a rear planetary carrier 442, supporting shafts 443 and a planetary carrier shaft 444 constituting the planetary gear carrier 440. FIG. 7's (a) and (b) are a front view and a rear view respectively, and FIG. 7's (c) is a sectional view along C-C' in FIG. 7's (a).

The sun gear 410 is made of metal and is fixed at an intermediate part of the wing shaft 200. The internal gear 420 is made of resin. As shown in FIG. 5, the internal gear 420 is formed with key parts 421 extending in a front-rear direction at a plurality of positions on an outer circumferential surface of the internal gear 420, and the drum shaft 300 is formed with key groove parts 301 corresponding to the key parts 421 on the inner circumferential surface of the drum shaft 300. The drum shaft 300 and the internal gear 420 are fixed in the circumferential direction by engaging the key parts 421 with the key groove parts 301.

As shown in FIG. 5, each group of planetary gears 430 includes a first gear 431 and a second gear 432. The first gear 431 and the second gear 432 are made of resin. The first gear 431 and the second gear 432 are engaged with each other. The first gear 431 is engaged with the sun gear 410, and the second gear 432 is engaged with the internal gear 420. A torque generated by the sun gear 410 is transferred to the internal gear 420 through four transfer paths constituted by four groups of planetary gears 430.

The planetary gear carrier 440 includes the front planetary carrier 441, the rear planetary carrier 442, eight supporting shafts 443 and the planetary carrier shaft 444. The four groups of planetary gears 430 are clamped by the front planetary carrier 441 and the rear planetary carrier 442 from both sides of the planetary gears 430. Eight supporting shafts 443 are erected between the front planetary carrier 441 and the rear planetary carrier 442. Each planetary gear 430, i.e., each first gear 43 or each second gear 432, is rotatably mounted on each supporting shaft 443. The rear planetary carrier 442 is equivalent to a first planetary carrier of the present disclosure, and the front planetary carrier 441 is equivalent to a second planetary carrier of the present disclosure.

As shown in FIG. 6, the front planetary carrier 441 has a disc shape and is made of metal. A shaft hole 441a in which the wing shaft 200 is inserted is formed at the center of the front planetary carrier 441. In addition, eight inserting holes 441b, each of which is inserted by a front end 443a of each of the eight supporting shafts 443, are formed in the front planetary carrier 441. Further, on a front side of the front planetary carrier 441, a circular recess 441c a diameter of which is greater than that of the inserting holes 441b is formed at a position of each inserting hole 441b.

As shown in FIG. 7, the rear planetary carrier 442 has a disc shape and is made of metal. A shaft hole 442a in which the wing shaft 200 is inserted is formed at the center of the rear planetary carrier 442. In addition, eight inserting recesses 442b, each of which is inserted by a base end 443b of each of the eight supporting shafts 443, are formed in the rear planetary carrier 442. Further, four projections 442c protruding forward are formed on the front side of the rear planetary carrier 442. An upper surface of each of the projections 442c is a flat surface; and as shown by dotted lines in FIG. 7(c), when the front planetary carrier 441 is mounted at the front ends 443a of the supporting shafts 443, the upper surfaces contact a back surface of the front planetary carrier 441. In order to enable the gears 410, 420 and 430 to rotate smoothly in the receiving part 300a, lubricating oil is sealed, and the amount of the lubricating oil can be reduced by the amount equivalent to a space filled by the projections 442c.

The supporting shafts 443 are made of metal. The diameter of the base end 443b of each supporting shaft 443 is slightly larger than that of the inserting recess 442b. Each base end 443b is pressed into the inserting recess 442b, whereby the supporting shaft 443 is fixed to the rear planetary carrier 442. The front end 443a of each supporting shaft 443 is formed to be a cylinder easy to be pressed during riveting, and the front end 443a has a diameter smaller than those of other parts.

The planetary carrier shaft 444 is formed integrally with the rear planetary carrier 442, and extends rearward from the back surface of the rear planetary carrier 442. The planetary carrier shaft 444 is coaxial with the drum shaft 300; and the shaft holes 444a in which the wing shaft 200 is inserted are continuously formed from the shaft hole 442a of the rear planetary carrier 442. A rack 444b is formed on an outer circumferential surface of the rear part of the planetary carrier shaft 444.

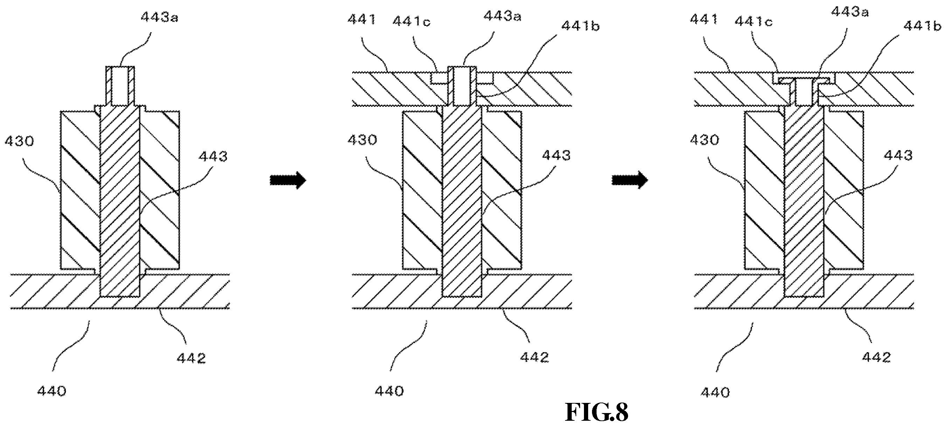

FIG. 8 is a diagram illustrating assembly of the planetary gear carrier 440.

Firstly, as shown in a left diagram, the planetary gear 430 is mounted on the supporting shaft 443. Then, as shown in a central diagram, the front end 443a of the supporting shaft 443 is inserted into the inserting hole 441b, so that the front planetary carrier 441 is mounted at the front end 443a of the supporting shaft 443. Then, as shown in a right diagram, the front end 443a is riveted in the recess 441c by being pressed from the front through a riveting machine, so that the front planetary carrier 441 is fixed at the front end 443a of the supporting shaft 443. The riveted front end 443a is received in the recess 441c without protruding out of the recess 441c.

In this way, after the planetary gear 430 is mounted on the supporting shaft 443, the front planetary carrier 441 and the rear planetary carrier 442 are fixed in positions of the supporting shaft 443 to complete the planetary gear carrier 440.

It should be noted that, as mentioned above, the upper surface of each projections 442c contacts the back surface of the front planetary carrier 441. Therefore, when the front ends 443a of the supporting shafts 443 are pressed from the front, the force applied from the front to the front planetary carrier 441 is borne by both the supporting shafts 443 and the projections 442c. As a result, the force exerted on the supporting shafts 443 during riveting can be reduced, and thus the deformation and the like of the supporting shafts 443 during riveting can be prevented. It should be noted that the projections 442c are equivalent to a stress part of the present disclosure.

Returning to FIG. 2 and FIG. 3, a cylindrical bearing part 510 is arranged at the center of the bearing unit 500. In the bearing part 510, a rolling bearing 511 and a rolling bearing 512 are arranged at the front and rear parts respectively, and a mechanical seal 513 is arranged at the front end. The outer circumferential surface of the drum shaft 300 is supported by the rolling bearings 511, 512 and smoothly rotates in the bearing part 510. In addition, water is prevented from intruding between the bearing part 510 and the drum shaft 300 through the mechanical seal 513.

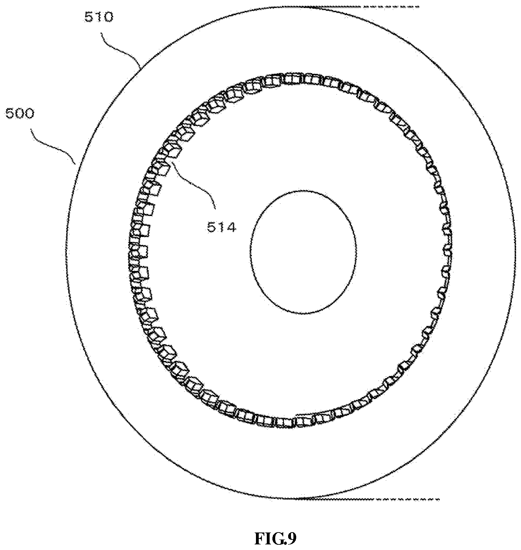

FIG. 9 is an enlarged perspective diagram illustrating a rear part of the bearing unit 500. As shown in FIG. 9, a rack 514 is formed on an inner surface at the rear end of the bearing part 510 along the entire circumference thereof.

A fixing flange part 520 is formed around the bearing part 510 in the bearing unit 500. A mounting protrusion 521 is formed at a lower end of the fixing flange part 520.

The bearing unit 500 is fixed at the rear surface of the outer tank 20 through the fixing flange part 520 by fastening screws and other fixing methods. The wing shaft 200 and the drum shaft 300 enter the outer tank 20 in a state that the driving unit 30 is mounted on the outer tank 20. The drum 22 is fixed on the drum shaft 300, and the rotating body 24 is fixed on the wing shaft 200. The rear end of the wing shaft 200 is protruded from the planetary carrier shaft 444 backward and is fixed on the shaft sleeve hole 113 of the rotor 110.

The clutch mechanism part 600 includes: a clutch body 610, a clutch spring 620, a clutch lever 630, a lever supporting part 640, a clutch driving apparatus 650, a relaying rod 660 and a mounting plate 670.

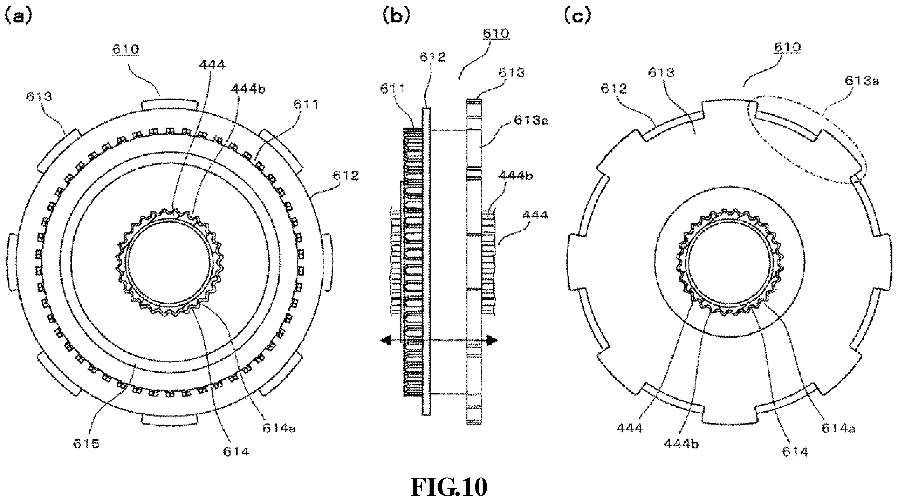

FIG. 10 is a diagram illustrating a structure of the clutch body 610. FIG. 10's (a), (b) and (c) are respectively a front view, a right side view and a rear view of the clutch body 610.

As shown in FIG. 10, the clutch body 610 has an approximate disc shape. An annular rack 611 is formed on an outer circumferential surface at the front end of the clutch body 610. The rack 611 is formed to be engaged with the rack 514 in the bearing unit 500. In addition, a flange part 612 is formed behind the rack 611 on the outer circumferential surface of the clutch body 610. Further, an annular engaging flange part 613 is formed at the rear end of the clutch body 610. The engaging flange part 613 has the same shape as that of the engaged recess 114 of the rotor 110, and is provided with uneven parts 613a along the entire circumference thereof. When the engaging flange part 613 is inserted into the engaged recess 114, the uneven parts 613a and the uneven parts 114a are engaged with one another.

The planetary carrier shaft 444 is inserted into a shaft hole 614 of the clutch body 610. A rack 614a formed on an inner circumferential surface of the shaft hole 614 is engaged with the rack 441b formed on the outer circumferential surface of the planetary carrier shaft 444. As a result, the clutch body 610 is in a state in which movement in the front and rear directions relative to the planetary carrier shaft 444 is allowed and rotation in the circumferential direction is limited.

An annular receiving groove 615 for receiving the clutch spring 620 is formed outside of the shaft hole 614 in the clutch body 610. One end of the clutch spring 620 abuts against the rear end of the bearing part 510, and the other end of the clutch spring 620 abuts against the bottom surface of the receiving groove 615.

Returning to FIG. 2 and FIG. 3, a pushing part 631 configured to contact the rear of the flange part 612 of the clutch body 610 and push the flange part 612 forward is formed on an upper end of the clutch lever 630. The clutch lever 630 is rotatably supported by a supporting shaft 641 arranged on the lever supporting part 640. A mounting shaft 632 is formed at a lower end of the clutch lever 630.

The clutch driving apparatus 650 is arranged below the clutch lever 630. The clutch driving apparatus 650 includes a torque motor 651 and a disc-shaped cam 652 which rotates about a horizontal axis by virtue of the torque of the torque motor 651. A camshaft 653 is arranged at the periphery on the cam 652. A rotating center of the cam 652 is consistent with a center of the mounting shaft 632 of the clutch lever 630 in the front and rear directions.

The relaying rod 660 extends up and down and connects the clutch lever 630 and the cam 652. The upper end of the relaying rod 660 is mounted on the mounting shaft 632 of the clutch lever 630, and the lower end of the relaying rod 660 is mounted on the camshaft 653 of the cam 652. A spring 661 is integrally formed in a middle position of the relaying rod 660 and is an extension spring.

The lever supporting part 640 and the clutch driving apparatus 650 are fixed on the mounting plate 670 by fastening screws and other fixing methods. The mounting plate 670 is fixed on the mounting protrusion 521 of the bearing unit 500 by screws.

In the case that the driving form of the driving part 30 is switched from the uniaxial driving form to the biaxial driving form, the torque motor 651 drives the cam 652 to rotate with the camshaft 653 being positioned at the lowest part, as shown in FIG. 2. Along with the rotation of the cam 652, the lower end of the clutch lever 630 is pulled downward by the relaying rod 660. The clutch lever 630 rotates forward about the supporting shaft 641, and thus the pushing part 631 pushes the clutch body 610 forward. The clutch body 610 moves forward against the elastic force of the clutch spring 620, and the rack 611 of the clutch body 610 is engaged with the rack 514 of the bearing unit 500.

The rack 611 of the clutch body 610 reaches a position where the rack 611 is engaged with the rack 514 when the camshaft 653 is moved to a specified middle position. At this moment, the spring 661 of the relaying rod 660 is in a natural length. Since the clutch body 610 will not move to a position in front of the engaging position, the spring 661 extends downward when the camshaft 653 is moved from the specified position to the lowest position, as shown in FIG. 2. In this way, the clutch lever 630 is pulled by the spring 661 to rotate forward, thus the clutch body 610 positioned at the engaging position is applied a pressing force by the pushing part 631. Accordingly, the rack 611 can be engaged with the rack 514 tightly.

When the rack 611 is engaged with the rack 514, the rotation of the clutch body 610 in the circumferential direction relative to the bearing unit 500 is limited and the clutch body is in a non-rotatable state, thus the gear carrier shaft 441 of the planetary gear mechanism 400, namely the planetary gear carrier 440, is fixed to be non-rotatable. In such a state, when the rotor 110 rotates, the wing shaft 200 rotates at a rotating speed equal to the rotating speed of the rotor 110, and the rotating body 24 connected with the wing shaft 200 also rotates at a rotating speed equal to the rotating speed of the rotor 110. As for the planetary gear mechanism 400, the sun gear 410 rotates along with the rotation of the wing shaft 200. As mentioned above, the planetary gear carrier 440 is in a fixed state, thus the planetary gears 430 cannot perform a revolution and can only revolve on its axis along with the rotation of the sun gear 410. The first gears and second gears of the planetary gears 430 rotate with the sun gear 410 in a reverse direction and the same direction respectively, and the internal gear 420 rotates with the sun gear 410 in the same direction (with reference to FIG. 5). Accordingly, the drum shaft 300 fixed on the internal gear 420 rotates at a rotating speed lower than that of the wing shaft 200 in the same direction as the wing shaft 200, and the drum 22 fixed on the drum shaft 300 rotates at a rotating speed lower than that of the rotating body 24 in the same direction as the rotating body 24. In other words, the rotating body 24 rotates at a rotating speed lower than that of the drum 22 in the same direction as the drum 22.

On the other hand, in the case that the driving form of the driving part 30 is switched from the biaxial driving form to the uniaxial driving form, the torque motor 651 drives the cam 652 to rotate with the camshaft 653 being positioned at the uppermost part, as shown in FIG. 3. When the cam 652 rotates and the camshaft 653 moves upward, the spring 661 contracts firstly. After the spring 661 returns to the natural length, the relaying rod 660 moves upward along with the movement of the camshaft 653, and the lower end of the clutch lever 630 is pushed by the relaying rod 660 to move upward. The clutch lever 630 rotates backward about the supporting shaft 641, and thus the pushing part 631 is separated from the flange part 612 of the clutch body 610. The clutch body 610 moves backward by the elastic force of the clutch spring 620, and the engaging flange part 613 of the clutch body 610 is engaged with the engaged recess 114 of the rotor 110.

When the engaging flange part 613 is engaged with the engaged recess 114, the rotation in the circumferential direction of the clutch body 610 relative to the rotor 110 is limited, and the clutch body 610 can rotate together with the rotor 110. In such a state, when the rotor 110 rotates, the wing shaft 200 and the clutch body 610 rotate at a rotating speed equal to the rotating speed of the rotor 110. At this moment, as for the planetary gear mechanism 400, the sun gear 410 and the planetary gear carrier 440 rotate at a rotating speed equal to that of the rotor 110. Thus, the internal gear 420 rotates at a rotating speed equal to that of the sun gear 410 and the planetary gear carrier 440, and the drum shaft 300 fixed on the internal gear 420 rotates at a rotating speed equal to that of the rotor 110. That is, in the driving part 30, the wing shaft 200, the planetary gear mechanism 400 and the drum shaft 300 integrally rotate. Therefore, the drum 22 and the rotating body 24 integrally rotate.

The drum washing machine 1 performs the washing operation of various operation modes. A washing process, an intermediate spin-drying process, a rinsing process and a final spin-drying process are sequentially performed in the washing operation. It should be noted that the intermediate spin-drying process and the rinsing process may be performed more than twice sometimes according to the operation mode.

In the washing process and the rinsing process, the driving form of the driving part 30 is switched to the biaxial driving form. With the washings in the drum 22 being soaked in water and the water accumulated in the outer tank 20 being not reached a specified water level at a lower edge of a throwing inlet 11, the driving motor 100 alternately performs right rotation and left rotation. As a result, the drum 22 and the rotating body 24 alternately performs the right rotation and the left rotation with the rotating speed of the rotating body 24 being greater than that of the drum 22. At this time, the drum 22 rotates at a rotating speed so that the centrifugal force applied to the washings is smaller than the gravity.

The washings in the drum 22 are lifted up and down by the baffles 23, and are thrown onto the inner circumferential surface of the drum 22. In addition, at the rear part of the drum 22, the washings contact the projection 24a of the rotating body 24 in a rotating state, and are rubbed and stirred by the projection 24a. Thereby, the washings are washed or rinsed.

In this way, not only a mechanical force generated by the rotation of the drum 22 but also a mechanical force generated by the rotating body 24 can be applied to the washings during a washing and rinsing processes, and thus the detergency is expected to be improved. The driving form of the driving part 30 is switched to the uniaxial driving form in the intermediate spin-drying process and the final spin-drying process. The driving motor 100 (namely, the drum 22) and the rotating body 24 integrally rotate at a rotating speed so that the centrifugal force acted on the washings in the drum 22 is far larger than the gravity. Due to the action of the centrifugal force, the washings are pressed on the inner circumferential surface of the drum 22 for spin-drying.

In this way, the drum 22 and the rotating body 24 integrally rotate during the spin-drying process, thus the washings attached to the drum 22 can be well spin-dried without being stirred by the rotating body 24.

### <Effects of embodiments>

As mentioned above, according to the present embodiment, as described with reference to FIG. 5 to FIG. 8, as for the planetary gear carrier 440 of the planetary gear mechanism 400, the rear planetary carrier 442 and the front planetary carrier 441 are fixed by fixing the front planetary carrier 441 at the front end 443a of the supporting shaft 443 provided with the planetary carrier 43. Thus, compared with a previous structure in which mounting protrusions for fixing the rear planetary carrier 442 and the front planetary carrier 441 are additionally provided between the rear planetary carrier 442 and the front planetary carrier 441, the rear planetary carrier 442 and the front planetary carrier 441 can be manufactured at a high precision without not only aligning positions of the front end 443a of the supporting shaft 443 and the inserting hole 441b of the front planetary carrier 441, but also aligning positions of the mounting protrusion and inserting hole corresponding to screws of the mounting protrusion and the like. As a result, the manufacture of the planetary gear carrier 440 and even the planetary gear mechanism 400 can be simplified. In addition, since the mounting protrusions can be omitted, the cost of the planetary gear mechanism 400 can be reduced.

Further, according to the present embodiment, since the front ends 443a of the supporting shafts 443 and the front planetary carrier 441 are fixed by riveting, the rear planetary carrier 442 and the front planetary carrier 441 can be fixed without using components for fixing the rear planetary carrier 442 and the front planetary carrier 441, such as screws and the like.

Further, according to the present embodiment, the torque generated by the sun gear 410 is transferred to the internal gear 420 through four transfer paths constituted by the four groups of planetary gears 430. As a result, the torque of the sun gear 410 can be dispersed and transferred at the appropriate size; and the size and the number of teeth of the planetary gears 430 can be set to keep appropriate strength and number of teeth. Therefore, the planetary gears 430 are not easy to be damaged and the like, and the reliability of the planetary gear mechanism 400 can be improved.

In addition, the number of the transfer paths is not limited to four, and can also be three or five. That is, in order to achieve the above-mentioned effect, the number of the transfer paths for transferring the torque through the planetary gears 430 can be set in a range of three to five. When the number of the transfer paths is not greater than two, the torque cannot be appropriately dispersed, thus the torque applied to the planetary gears 430 becomes larger and the planetary gears 430 are easy to be damaged. In addition, when the number of the transfer paths is greater than six, the planetary gears 430 become smaller or the teeth become thinner, proper strength cannot be secured, and the planetary gears 430 are still easy to be damaged.

Although embodiments of the present disclosure are described above, the present disclosure is not limited to the above embodiments. In addition, embodiments of the present disclosure may be subjected to various modifications in addition to the description above.

### <Modification>

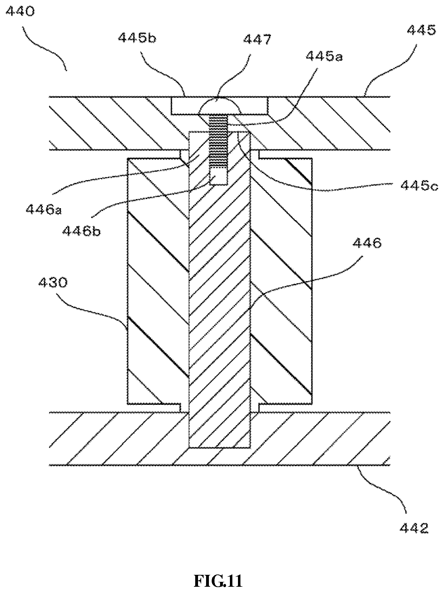

FIG. 11 is a diagram illustrating a structure of the planetary gear carrier 440 according to the modification.

In the above-mentioned embodiment, the front planetary carrier 441 is fixed at the front end 443a of the supporting shaft 443 by riveting. In contrast, in the present modification, the front planetary carrier 445 is fixed at the front end 446a of the supporting shaft 446 through a screw 447.

A screw hole 446b is formed at the front end 446a of the supporting shaft 446. On the other hand, a inserting hole 445a to be inserted by the screw 447, a recess 445b for receiving the head part of the screw 447, and an inserting recess 445c to be inserted by the front end 446a of the supporting shaft 446 are formed in the front planetary carrier 445. Other structures of the front planetary carrier 445 are the same as those of the front planetary carrier 441 in the above-mentioned embodiment.

When the front end 446a of the supporting shaft 446 is inserted into the inserting recess 445c of the front planetary carrier 445, the inserting hole 445a of the front planetary carrier 445 is matched with the screw hole 446b of the supporting shaft 446. The screw 447 is inserted into the inserting hole 445a and fixed in the screw hole 446b. As a result, the front planetary carrier 445 is fixed at the front end 446a of the supporting shaft 446.

According to the present modification, since the front planetary carrier 445 and the front end 446a of the supporting shaft 446 are fixed by the screw 447, the planetary gear carrier 440 can be easily disassembled by removing the screw 447. As a result, for example, the planetary gears 430 can be easily replaced with new planetary gears 430 when the planetary gears 430 are damaged.

### <Other Modifications>

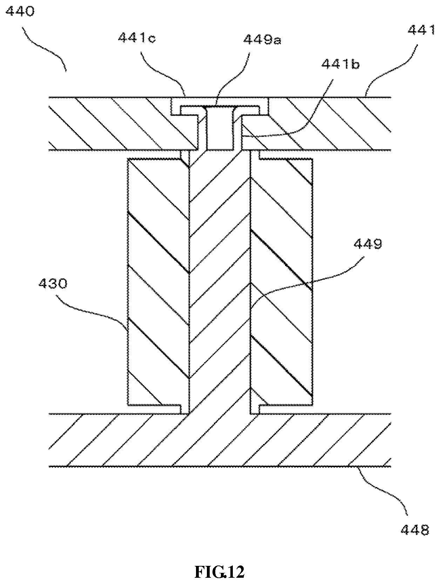

In the above-mentioned embodiment, the base ends 443b of the supporting shafts 443 as additional components are fixed on the rear planetary carrier 442. However, as shown in FIG. 12, a front end 449a of the supporting shaft 449 integrally formed with the rear planetary carrier 448 can also be fixed to the front planetary carrier 441 by riveting. Similarly, the supporting shafts 446 in the modification can also be integrally formed with the rear planetary carrier 442.

Further, in the above-mentioned embodiment, the supporting shafts 443 are pre-pressed and fixed in the rear planetary carrier 442, then the front ends 443a of the supporting shafts 443 are fixed to the front planetary carrier 441 by riveting after the planetary gears 430 being mounted on the supporting shafts 443. However, the planetary gear carrier 440 can also adopt the following structure in which the supporting shafts 443 are pre-pressed and fixed in the front planetary carrier 441, then the front ends 443a of the supporting shafts are fixed to the rear planetary carrier 442 by riveting after the planetary gears 430 being mounted on the supporting shafts 443. In this case, similar to the modification, the rear planetary carrier 442 and the front ends 443a of the supporting shafts 443 can also be fixed through the screws. In this case, the front planetary carrier 441 is equivalent to a first planetary carrier of the present disclosure, and the rear planetary carrier 442 is equivalent to a second planetary carrier of the present disclosure.

Further, in the above-mentioned embodiment, the projections 442c are formed on the front surface of the rear planetary carrier 442. When the front planetary carrier 441 is mounted at the front ends 443a of the supporting shafts 443, the upper surfaces of the projections 442c contact the back surface of the front planetary carrier 441. However, the planetary gear carrier 440 can also adopt the following structure in which the projections are formed on the back surface of the front planetary carrier 441, and the lower surfaces of the projections contact the front surface of the rear planetary carrier 442 when the front planetary carrier 441 is mounted at the front ends 443a of the supporting shafts 443.

Further, in the above-mentioned embodiment, the drum 22 rotates about an inclination shaft inclining relative to the horizontal direction. However, the drum 22 of the drum washing machine 1 can also rotates about a horizontal axis.

Further, although the drum washing machine 1 in the above embodiment does not have a drying function, the present disclosure also can be applied to a drum washing machine with the drying function, that is, a drum washing and drying machine.

In addition, embodiments of the present disclosure can be subjected to various changes within the scope of a technical idea shown in the claims.

### List of reference numerals

10: housing; 20: outer tank; 22: drum; 24: rotating body; 24a: projection; 30: driving part; 100: driving motor; 400: planetary gear mechanism; 410: sun gear; 420: internal gear; 430: planetary gear; 431: first gear; 432: second gear; 440: planetary gear carrier; 441: front planetary carrier (second planetary carrier); 441b: inserting hole; 442: rear planetary carrier (first planetary carrier); 442c: projection (stress part); 443: supporting shaft; 443a: front end; 443b: base end; 445: front planetary carrier (second planetary carrier); 445a: inserting hole; 446: supporting shaft; 447: screw; 448: rear planetary carrier (first planetary carrier); and 449: supporting shaft.

## Claims

1. A drum washing machine, comprising:
an outer tank arranged in a housing;
a drum, which is arranged in the outer tank and capable of rotating about a horizontal axis or an inclination axis inclining relative to a horizontal direction;
a rotating body arranged at a rear part of the drum, a surface of the rotating body being provided with a projection for contacting washings; and
a driving part comprising a driving motor and a planetary gear mechanism, wherein rotation of the driving motor is transferred to the drum after being decelerated through the planetary gear mechanism, so that the drum and the rotating body are enable to rotate at different rotating speeds;
wherein the planetary gear mechanism comprises:
a sun gear;
an annular internal gear surrounding the sun gear;
a plurality of planetary gears interposed between the sun gear and the internal gear; and
a planetary gear carrier through which the planetary gears are rotatably held;
wherein the planetary gear carrier comprises: a first planetary carrier and a second planetary carrier, wherein the plurality of planetary gears are clamped by the first planetary carrier and the second planetary carrier from both sides of the planetary gears; and supporting shafts erected between the first planetary carrier and the second planetary carrier, wherein the planetary gears are rotatably provided on the supporting shafts;
wherein base ends of the supporting shafts are fixed to the first planetary carrier before the planetary gears being provided on the supporting shafts, or the supporting shafts are integrally formed with the first planetary carrier; and
the second planetary carrier is fixed to front ends of the supporting shafts provided with the planetary gears.

2. The drum washing machine according to claim 1, wherein
the second planetary carrier has inserting holes into which the front ends of the supporting shafts are inserted; and
the second planetary carrier is fixed at the front ends of the supporting shafts by riveting the front ends of the supporting shafts penetrating through the inserting holes.

3. The drum washing machine according to claim 2, further comprising:
a stress part interposed between the first planetary carrier and the second planetary carrier, wherein the stress part is configured to bear force applied to the first planetary carrier together with the supporting shafts when the front ends of the supporting shafts are stressed by riveting.

4. The drum washing machine according to claim 1, wherein
the second planetary carrier has inserting holes into which screws are inserted; and
the second planetary carrier is fixed at the front ends of the supporting shafts by fixing the screws penetrating through the inserting holes to the front ends of the supporting shafts.

5. The drum washing machine according to any one of claims 1 to 4, wherein
the internal gear is fixed to a rotating shaft of the drum; and
in the planetary gear mechanism, a total number of transfer paths for transferring a torque from the sun gear to the internal gear through the planetary gears is set to be any number selected from three to five.
